(19) Europäisches Patentamt
European Patent Office
Office européen des brevets

(11) **EP 3 291 430 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(51) Int Cl.:
*H02M 1/44* *(2007.01)*       *H02M 3/07* *(2006.01)*

(21) Anmeldenummer: **16186140.6**

(22) Anmeldetag: **29.08.2016**

(54) **LADUNGSPUMPE ZUR ERZEUGUNG EINER AUSGANGSSPANNUNG DURCH VERVIELFACHUNG EINER DC-BETRIEBSSPANNUNG**

CHARGE PUMP FOR GENERATING AN OUTPUT VOLTAGE BY MULTIPLYING A DC OPERATING VOLTAGE

POMPE DE CHARGEMENT DESTINEE A PRODUIRE UNE TENSION DE SORTIE PAR MULTIPLICATION D'UNE TENSION D'ALIMENTATION EN COURANT CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.03.2018 Patentblatt 2018/10**

(73) Patentinhaber: **Elmos Semiconductor SE 44227 Dortmund (DE)**

(72) Erfinder:
• **Maurer, Peter**
**42555 Velbert (DE)**
• **Kapoor, Niron**
**45143 Essen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
CN-U- 204 886 694       JP-A- 2002 140 131
JP-A- 2004 129 377       JP-A- 2013 021 845

• **None**

**Beschreibung**

Die Erfindung betrifft eine Ladungspumpe zur Erzeugung einer Ausgangsspannung durch ganzzahlige oder gebrochenzahlige Vervielfachung einer DC-Betriebsspannung.

Ladungspumpen sind z. B. aus JP-A-2013021845 und CN-U-204886694 bekannt und werden für die unterschiedlichsten Verwendungszwecke eingesetzt.

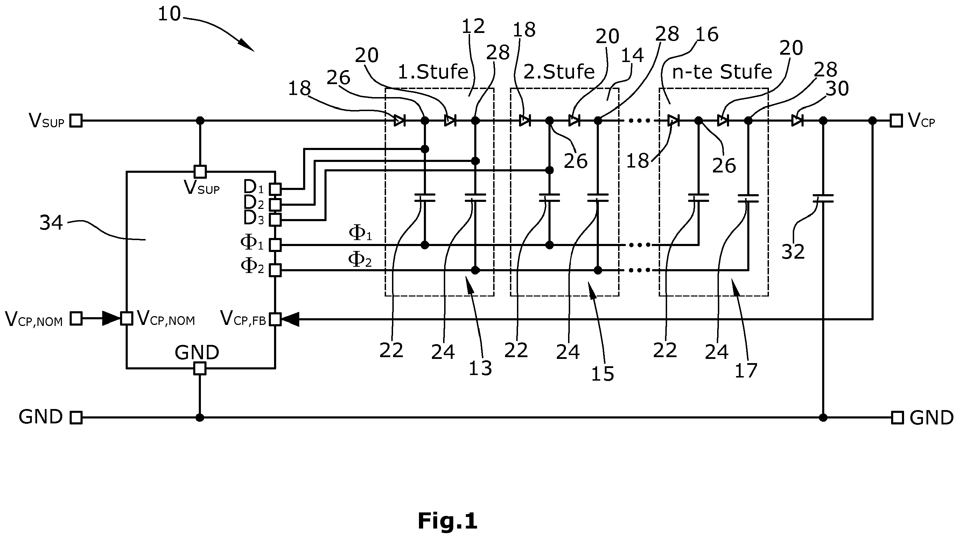

Fig. 1 zeigt eine übliche Struktur einer Ladungspumpe 10, die in der Literatur auch unter dem Begriff der "Dickson-Ladungspumpe" bekannt ist. Die Vervielfachung der Versorgungsspannung $V_{SUP}$ findet durch eine Kaskadierung von Dioden und Kondensatoren statt, wobei pro Pumpstufe 12,14,16 üblicherweise zwei Stufenschalter 18,20 und Pumpkondensatoren 22,24 über jeweilige Knotenpunkte 26,28 als Dioden-/Pumpkondensator-Verschaltungen 13,15,17 verbunden sind. Die Verschaltung der einzelnen Pumpstufen intern und untereinander über die Stufenschalter ist ebenfalls gezeigt.

Die Schaltelemente 18,20 sind hier als Dioden ausgeführt. In der Literatur sind andere Varianten zu finden, in denen stattdessen NMOS-Transistoren oder komplementäre PMOS/NMOS-Transistorpaare verwendet werden. In Bezug auf das erfindungsgemäße Regelungskonzept sind diese Varianten gleichbedeutend.

Die Fußpunkte der Kondensatoren 22,24 jeder Pumpstufe 12,14,16 werden durch zwei zueinander komplementäre, d.h. um 180° phasenverschobene Lade-(Phasen-)spannungen $\Phi_1$ und $\Phi_2$ angesteuert. Der Ausgang der letzten Pumpstufe 16 wird über ein weiteres Schaltelement 30 auf einen massebezogenen Pufferkondensator 32 geschaltet, der die Ausgangsspannung $V_{CP}$ der Ladungspumpe 10 bereitstellt. Üblicherweise wird der Pufferkondensator 32 zwischen $V_{CP}$ und dem Massepotential angeschlossen, wie in Fig. 1 und den anderen alternative Ladungspumpenkonzepte darstellenden Figuren gezeigt ist. Generell ist es aber möglich, den Pufferkondensator zwischen $V_{CP}$ und einem beliebigen DC-Potential, z.B. auch zwischen $V_{CP}$ und $V_{SUP}$ zu schalten. Der Vorteil dabei ist, dass man gegebenenfalls einen kleineren Spannungsabfall über diesem Pufferkondensator erreichen kann und damit Pufferkondensatoren mit geringerer Spannungsfestigkeit eingesetzt werden können.

In dem in Fig. 1 gezeigten Konzept wird davon ausgegangen, dass die Ausgangsspannung $V_{CP}$ der Ladungspumpe 10 geregelt werden soll. Dazu weist eine Ansteuer- und Regeleinheit 34 den Eingang $V_{CP,NOM}$ auf, der dem nominellen Wert der Ausgangsspannung entspricht. Der tatsächliche Wert von $V_{CP}$ wird über den Rückkopplungseingang $V_{CP,FB}$ zur Ansteuer- und Regeleinheit 34 zurückgeführt, so dass eine geschlossene Regelschleife gebildet werden kann.

Die drei mit $D_1$, $D_2$ und $D_3$ bezeichneten Eingänge der Ansteuer- und Regeleinheit 34 werden in einem der im Folgenden vorgestellten Regelungskonzepte verwendet und sind nicht Bestandteil der Grundstruktur der einfachen Ladungspumpe.

In der in Fig. 1 gezeigten Konstellation einer Ladungspumpe 10 wird bei jeder steigenden Flanke der Phasenspannung $\Phi_2$ ein Ladungspaket auf den Pufferkondensator übertragen.

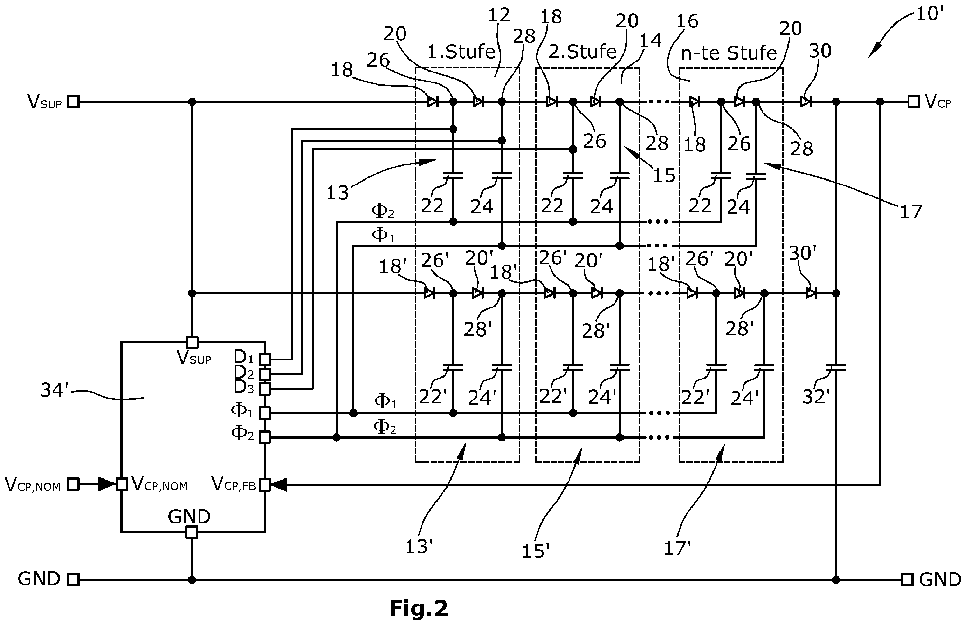

Um den Wirkungsgrad der Ladungspumpe zu erhöhen, ist pro Kaskadenstufe eine Ergänzung um eine zweite Dioden-/Pumpkondensator-Verschaltung 13',15',17' aus Stufenschaltern 16',20', Pumpkondensatoren 22',24' und Knotenpunkten 26',28' möglich, die pro Pumpstufe 12,14,16 in einer komplementären Zuordnung zu den oben beschriebenen Dioden-/Pumpkondensator-Verschaltungen 13,15,17 mit Phasenspannungen $\Phi_1$ und $\Phi_2$ verbunden wird. Eine solche ebenfalls grundsätzlich bekannte Ausführung einer Ladungspumpe 10' ist in Fig. 2 gezeigt.

Im Gegensatz zu der in Fig. 1 gezeigten Struktur wird bei der Ladungspumpe 10' nach Fig. 2 bei jeder Flanke der beiden Phasenspannungen $\Phi_1$ und $\Phi_2$ Ladung transportiert. Bei einer steigenden Flanke an $\Phi_1$ geschieht dies über den oberen Teil der Kaskadenstufe, bei einer steigenden Flanke an $\Phi_2$ über den unteren Teil der Kaskadenstufe. Diese Verdopplung des resultierenden Stroms wird allerdings durch eine Verdopplung der für die Pumpstufen benötigten Chipfläche "erkauft".

Das erfindungsgemäße Regelungskonzept kann bei beiden Varianten einer Ladungspumpe 10,10' eingesetzt werden.

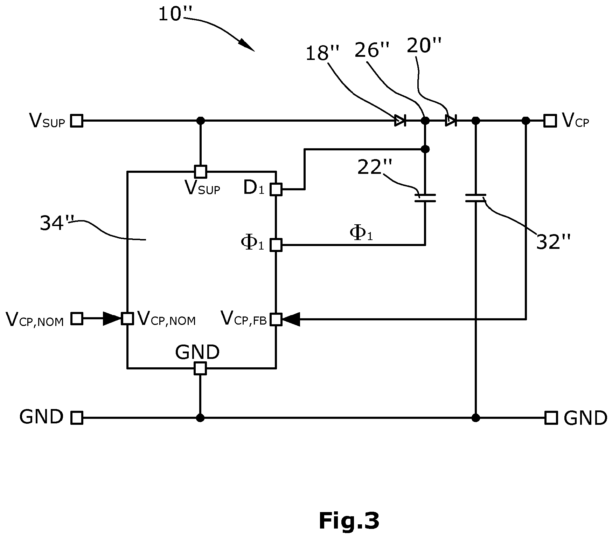

Bei Ladungspumpen mit geringeren Anforderungen an den Multiplikationsfaktor (d.h. an die Anzahl der Stufen) kann die Länge der Kaskade auf eine "halbe" Stufe, also einen Pumpkondensator, reduziert werden (siehe Fig. 3). In diesem Fall, der z.B. bei internen Ladungspumpen 10" für die Gateansteuerung von High-Side-Schalttransistoren zum Einsatz kommen könnte, ist auch nur eine Phasenspannung erforderlich. Dennoch können auch in diesen Fällen die nachfolgend erläuterten erfindungsgemäßen Regelungsprinzipien verwendet werden.

Aufgabe der Erfindung ist es, die Effizienz von Ladungspumpen zu erhöhen.

Die Erfindung ist durch den unabhängigen Anspruch definiert. Weitere Ausführungsformen sind durch die abhängigen Ansprüche definiert.

Alle im Folgenden beschriebenen Implementierungen, Beispiele oder Aspekte, die nicht unter den Umfang der derart definierten Erfindung fallen, sind als Hintergrundinformation zu interpretieren, welche bereitgestellt wird, um das Verständnis der beanspruchten Erfindung zu unterstützen. Der Schutzumfang ist strikt und ausschließlich auf jene Varianten beschränkt, welche unter den Wortlaut der beigefügten Ansprüche fallen.

Zur Lösung dieser Aufgabe wird mit der Erfindung eine Ladungspumpe zur Erzeugung einer Ausgangsspannung durch ganzzahlige oder gebrochenzahlige Vervielfachung einer DC-Betriebsspannung vorgeschlagen, die versehen ist mit

- mindestens einer Pumpstufe, die mindestens einen Pumpkondensator und mindestens einen Stufenschalter aufweist und zwischen der DC-Betriebsspannung ($V_{SUP}$)und einer Ladespannung geschaltet ist,
- wobei die Ladesspannung einen Zeitverlauf mit abwechselnd und jeweils zu Kommutierungszeitpunkten beginnenden, ansteigenden sowie abfallenden Zeitabschnitten aufweist,
- einem Pufferkondensator, der über einen weiteren Schalter mit der mindestens einen Pumpstufe verbunden ist und über dem die Ausgangsspannung anliegt, und
- einer Ansteuer- und Regeleinheit zur Erzeugung mindestens einer Ladespannung und zur Vorgabe der Kommutierungszeitpunkte zur Kommutierung der mindestens einen Ladespannung,
- wobei die Ansteuer- und Regeleinheit den jeweils nächsten Kommutierungszeitpunkt gemäß mindestens einer der drei nachfolgend genannten Bedingungen vorgibt (innere Schleife)

- mit dem Ablauf einer vorgebbaren Mindestzeitspanne ($t_{MIN}$) ab dem letzten Kommutierungszeitpunkt,
- mit dem Ablauf einer vorgebbaren Maximalzeitspanne ($t_{MAX}$) ab dem letzten Kommutierungszeitpunkt oder
- mit Erreichen vorgebbarer Maximal- und Minimalschwellwerte der mindestens einen Ladespannung innerhalb von deren ansteigenden bzw. abfallenden Zeitabschnitten und/oder mit Erreichen eines Schwellwerts eines Spannungsabfalls über mindestens einem Stufenschalter oder über mindestens einem der Stufenschalter, sofern der jeweilige Schwellwert innerhalb einer mit dem letzten Kommutierungszeitpunkt beginnenden Zeitspanne erreicht wird, die später als die Mindestzeitspanne ($t_{MIN}$) und früher als die Maximalzeitspanne ($t_{MAX}$) endet.

Dabei kann es zweckmäßig sein, wenn die Ansteuer- und Regeleinheit das Erreichen des Maximalschwellwerts und des Minimalschwellwerts jeweils anhand einer sich über dem mindestens einen Stufenschalter einer Pumpstufe einstellenden Spannung detektiert und/oder wenn die Größe des Pumpstroms zum Aufladen des mindestens einen Pumpkondensators der mindestens einen Pumpstufe in Abhängigkeit von der Größe der Abweichung der Ausgangsspannung von einer vorgebbaren Nennspannung veränderbar ist (äußere Schleife), indem der Ladestrom mit kleiner werdenden Abweichungen der Ausgansspannung von der Nennspannung kleiner wird.

Typischerweise umfasst die Ladungspumpe mehrere als Kaskade aufeinanderfolgend gestaltete Pumpstufen, wobei der Pufferkondensator über den weiteren Schalter mit der letzten Pumpstufe verbunden ist. Ferner sind die Schalter, d.h. die Stufenschalter und/oder der weitere Schalter, über den der Pufferkondensator mit der mindestens einen Pumpstufe oder mit der letzten der mehreren Pumpstufen verbunden ist, jeweils in Form einer Diode oder eines insbesondere als Diode geschalteten Transistors ausgebildet.

Bei einer ersten Variante einer kaskadierten erfindungsgemäßen Ladungspumpe kann vorgesehen sein,

- dass pro Pumpstufe der mindestens eine Stufenschalter mit dem mindestens einen Pumpkondensator verbunden ist, wobei der mindestens eine Pumpkondensator mit der Ladespannung verbunden ist,
- dass, bezogen auf die erste Pumpstufe, der Stufenschalter mit der Betriebsspannung verbunden ist und
- dass, bezogen auf jede weitere Pumpstufe, der Stufenschalter mit dem Knotenpunkt der jeweils vorherigen Pumpstufe verbunden ist.

Bei einer zweiten Variante einer kaskadierten erfindungsmäßen Ladungspumpe kann vorgesehen sein,

- dass pro Pumpstufe

- ein erster Stufenschalter sowie ein erster Pumpkondensator über einen ersten Knotenpunkt miteinander verbunden sind, wobei der zweite Stufenschalter mit dem ersten Knotenpunkt und der erste Pumpkondensator mit einer ersten Ladespannung verbunden ist und
- ein zweiter Stufenschalter sowie ein zweiter Pumpkondensator über einen zweiten Knotenpunkt miteinander verbunden sind, wobei der zweite Pumpkondensator mit einer zweiten Ladespannung verbunden ist,

- dass, bezogen auf die erste Pumpstufe, der erste Stufenschalter mit der Betriebsspannung verbunden ist und
- dass, bezogen auf jede weitere Pumpstufe, der erste Stufenschalter mit dem zweiten Knotenpunkt der jeweils vorherigen Pumpstufe verbunden ist.

Bei einer dritten Variante einer kaskadierten erfindungsgemäßen Ladungspumpe kann vorgesehen sein,

- dass pro Pumpstufe

  - ein erster Stufenschalter sowie ein erster Pumpkondensator über einen ersten Knotenpunkt miteinander verbunden sind, wobei der erste Pumpkondensator mit der ersten Ladespannung verbunden ist,
  - ein zweiter Stufenschalter sowie ein zweiter Pumpkondensator über einen zweiten Knotenpunkt miteinander verbunden sind, wobei der zweite Pumpkondensator mit einer zweiten Ladespannung verbunden ist,
  - ein dritter Stufenschalter sowie ein dritter Pumpkondensator über einen dritten Knotenpunkt miteinander verbunden sind, wobei der zweite Stufenschalter mit dem ersten Knotenpunkt und der dritte Pumpkondensator mit der ersten Ladespannung verbunden ist, und
  - ein vierter Stufenschalter sowie ein vierter Pumpkondensator über einen vierten Knotenpunkt miteinander verbunden sind, wobei der vierte Stufenschalter mit dem dritten Knotenpunkt und der vierte Pumpkondensator mit der ersten Ladespannung verbunden ist,

- dass, bezogen auf die erste Pumpstufe, der erste Stufenschalter und der dritte Stufenschalter jeweils mit der Betriebsspannung verbunden sind, und
- dass, bezogen auf jede weitere Pumpstufe, der erste Stufenschalter mit dem zweiten Knotenpunkt der jeweils vorherigen Pumpstufe und der dritte Stufenschalter mit dem vierten Knotenpunkt der jeweils vorherigen Pumpstufe verbunden ist.

Bei einer vierten Variante einer erfindungsgemäßen Ladungspumpe kann diese lediglich eine Stufe aufweisen, die wahlweise wie die erste Stufe der zuvor beschriebenen Varianten kaskadierter Ladungspumpen ausgebildet ist.

Eine weitere Variante der Erfindung betrifft eine Ladungspumpe zur Erzeugung einer Ausgangsspannung durch ganzzahlige oder gebrochenzahlige Vervielfachung einer DC-Betriebsspannung, mit

- mehreren Pumpstufen, die jeweils mindestens zwei Stufenschalter und mindestens zwei Pumpkondensatoren aufweisen und die aufeinanderfolgend sowie zwischen der DC-Betriebsspannung ($V_{SUP}$) und um 180° phasenverschobenen Ladespannungen geschaltet sind,
- wobei die Ladesspannungen jeweils einen Zeitverlauf mit abwechselnd und jeweils zu Kommutierungszeitpunkten beginnenden, ansteigenden sowie abfallenden Zeitabschnitten aufweist,
- einem zwischen der DC-Betriebsspannung und einem Massepotential geschalteten Pufferkondensator, der über einen weiteren Schalter mit der letzten der Pumpstufen verbunden ist und über dem die Ausgangsspannung anliegt, und
- einer Ansteuer- und Regeleinheit zur Erzeugung mindestens einer Ladespannung zur Vorgabe der Kommutierungszeitpunkte zur Kommutierung der mindestens einen Ladespannung,
- wobei die Ansteuer- und Regeleinheit den jeweils nächsten Kommutierungszeitpunkt gemäß mindestens einer der drei nachfolgend genannten Bedingungen vorgibt (innere Steuerung)

  - mit dem Ablauf einer vorgebbaren Mindestzeitspanne ($t_{MIN}$) ab dem letzten Kommutierungszeitpunkt,
  - mit dem Ablauf einer vorgebbaren Maximalzeitspanne ($t_{MAX}$) ab dem letzten Kommutierungszeitpunkt oder
  - mit Erreichen vorgebbarer Maximal- und Minimalschwellwerte der beiden Ladespannungen innerhalb von deren ansteigenden bzw. abfallenden Zeitabschnitten, sofern der jeweilige Schwellwert innerhalb einer mit dem letzten Kommutierungszeitpunkt beginnenden Zeitspanne erreicht wird, die später als die Mindestzeitspanne ($t_{MIN}$) und früher als die Maximalzeitspanne ($t_{MAX}$) endet.

Die Erfindung wird nachfolgend anhand verschiedener Ausführungsbeispiele sowie unter Bezugnahme auf die Zeichnung näher erläutert. Im Einzelnen zeigen dabei:

Fign. 1 bis 3     verschiedene Ladungspumpenkonzepte, wie sie nach der Erfindung verwendet werden können,

Fig. 4     eine Detailschaltung als Teil der Ansteuer- und Regeleinheit eines Ausführungsbeispiels der Erfindung,

Fign. 5 bis 7     Diagramme zur Darstellung der Zeitverläufe der Phasen- bzw. Ladespannung $\Phi_1$ (die Ladespannung $\Phi_2$ ist um 180° phasenverschoben dazu), wobei Fig. 5 den Verlauf einer Phasen- bzw. Ladespannung bei Kommutierung über $t_{MIN}$, Fig. 6 den Verlauf einer Ladespannung bei Kommutierung über die Schwellwerte und Fig. 7 den Verlauf einer Ladespannung bei Kommutierung über $t_{MAX}$ zeigt,

Fig. 8     eine Detailschaltung als Teil der Ansteuer- und Regeleinheit gemäß einem zweiten Ausführungsbeispiel der Erfindung und

Fign. 9 bis 11　Diagramme zur Darstellung der Zeitverläufe der Phasen- bzw. Ladespannung $\Phi_1$ (die Ladespannung $\Phi_2$ ist um 180° phasenverschoben dazu), wobei Fig. 9 den Verlauf der Diodenspannungen bei Kommutierung der Ladespannungen über $t_{MIN}$, Fig. 10 den Verlauf der Diodenspannungen bei Kommutierung der Ladespannungen über die Schwellwerte und Fig. 11 den Verlauf der Diodenspannungen bei Kommutierung der Ladespannungen über $t_{MAX}$ zeigt.

Die Erfindung wird nachfolgend anhand der Ladungspumpenkonzepte der Fign. 1 bis 3 beschrieben. Die nachfolgenden Ausführungen beziehen sich daher beispielhaft auf die Ladungspumpen 10,10',10" gemäß Fign. 1 bis 3.

1. Regelungskonzepte

1.1 Grundprinzip der Erfindung

Das Grundprinzip der Regelung besteht aus zwei ineinander geschachtelten "Regelschleifen".

Die "innere Regelschleife" dient dabei der Erzeugung der komplementären Phasenspannungen $\Phi_1$ und $\Phi_2$. Da ein Ladungstransport in den Pufferkondensator bzw. in die angeschlossene Last nur im Umfeld der Flanken der Phasensignale erfolgt, liegt ein erfindungsgemäßer Ansatz zur Steigerung des Wirkungsgrades der Ladungspumpe 10,10',10" der Fign. 1, 2 bzw. 3 darin, die Kommutierung der Phasenspannungen in dem Moment vorzunehmen, in dem der Ladungstransport des vorherigen Taktes abgeschlossen ist. Die zwei im Folgenden vorgestellten erfindungsgemäßen Varianten unterscheiden sich hinsichtlich des Kriteriums, das zur Bestimmung des optimalen Kommutierungszeitpunkts herangezogen wird, also hinsichtlich der Art und Weise, wie das Ende des Ladungstransports detektiert wird.

Die "äußere Regelschleife" dient dazu, bei Erreichen der Nennspannung am Ausgang der Ladungspumpe 10,10'10" der Fign. 1, 2 bzw. 3 die zugeführte Ladung zu reduzieren. Zu diesem Zweck sind die Treiber 22 der Phasensignale $\Phi_1$ und $\Phi_2$ als strombegrenzte Schalter ausgeführt. Solange z.B. im Hochlauf der Ladungspumpe ein hoher Ausgangsstrom benötigt wird, werden die Schalter mit ihrem vollen Nennstrom betrieben. Mit der Annäherung bzw. dem Erreichen der Nennspannung wird der Strom in den Schaltern kontinuierlich reduziert und damit die äußere Regelschleife geschlossen.

1.2 Variante 1: Kommutierung über Phasenspannungen

In der ersten hier vorgestellten erfindungsgemäßen Variante werden die Phasensignale $\Phi_1$ und $\Phi_2$ selber als Kriterium für den optimalen Kommutierungszeitpunkt herangezogen. Nach einer Kommutierung sind als Verlauf der Phasenspannungen $\Phi_1$ und $\Phi_2$ zwei gegenläufige trapezförmige Signale zu erwarten. Die Steigung der Flanken ist proportional zum Quotienten aus den Nennströmen der strombegrenzten Schalter und der effektiven Lastkapazität an den Ausgängen $\Phi_1$ und $\Phi_2$ der Steuereinheit für die Phasenspannungen $\Phi_1$ und $\Phi_2$.

Das Ende der Flanken wird detektiert, indem die Phasenspannungen mit zwei Schwellwerten ($V_{SUP}$-$V_{TH}$) und $V_{TL}$ verglichen werden. Als Kriterium für eine Kommutierung wird gewertet, wenn beide Phasenspannungen die jeweils anwendbare Schwelle über- bzw. unterschritten haben.

Neben dem Über-/Unterschreiten der Schwellen werden optional zwei weitere zeitliche Bedingungen verwendet:

- Nach einer erfolgten Kommutierung kann die nächste Kommutierung frühestens nach der Zeit $t_{MIN}$ stattfinden, auch wenn die Schwellenbedingung schon früher erfüllt war.
- Der zeitliche Abstand zweier aufeinander folgender Kommutierungen darf einen Wert von $t_{MAX}$ nicht überschreiten. Daher wird bei $t_{MAX}$ eine Kommutierung ausgelöst, auch wenn die Schwellenbedingung noch nicht erfüllt ist.

Durch diese zwei Zeitbedingungen wird praktisch die Arbeitsfrequenz der Ladungspumpe auf den folgenden Bereich eingegrenzt:

$$f_{MIN} = \frac{1}{2 \cdot t_{MAX}}$$

$$f_{MAX} = \frac{1}{2 \cdot t_{MIN}}$$

Die Begrenzung der maximalen Arbeitsfrequenz hat den Zweck der Begrenzung der von der Ladungspumpe ausgehenden EMV-Störungen. Wenn gewollt, kann durch die Definition einer Zeit $t_{MIN}$ gegen Null dieser EMV-Störungsverhinderungsmechanismus praktisch außer Kraft gesetzt werden.

Die Begrenzung der minimalen Arbeitsfrequenz schafft die Bedingung dafür, dass es im eingeschwungenen Zustand in Verbindung mit der äußeren Regelschleife zu einem besonders EMV-armen Betrieb der Ladungspumpe kommt.

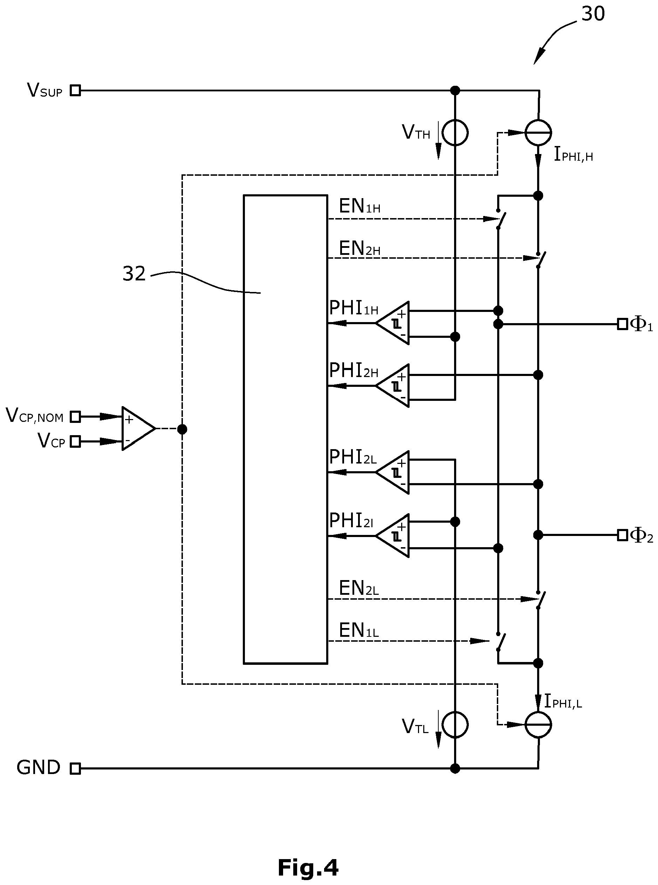

Das Blockschaltbild der Fig. 4 zeigt die zugrunde liegende Schaltungsstruktur der ersten Variante.

Für den Zustand $\Phi_1$=H und $\Phi_2$=L ($EN_{1H}$ und $EN_{2L}$ aktiv, $EN_{1L}$ und $EN_{2H}$ inaktiv) lassen sich die Kommutierungsbedingungen wie folgt zusammenfassen:

$$[(t \geq t_{MIN}) \wedge (PHI_{1H} = H) \wedge (PHI_{2L} = H)] \vee (t \geq t_{MAX})$$

Für den komplementären Zustand $\Phi_1$=L und $\Phi_2$=H ($EN_{1L}$ und $EN_{2H}$ aktiv, $EN_{1H}$ und $EN_{2L}$ inaktiv) gilt analog:

$$[(t \geq t_{MIN}) \wedge (PHI_{1L} = H) \wedge (PHI_{2H} = H)] \vee (t \geq t_{MAX})$$

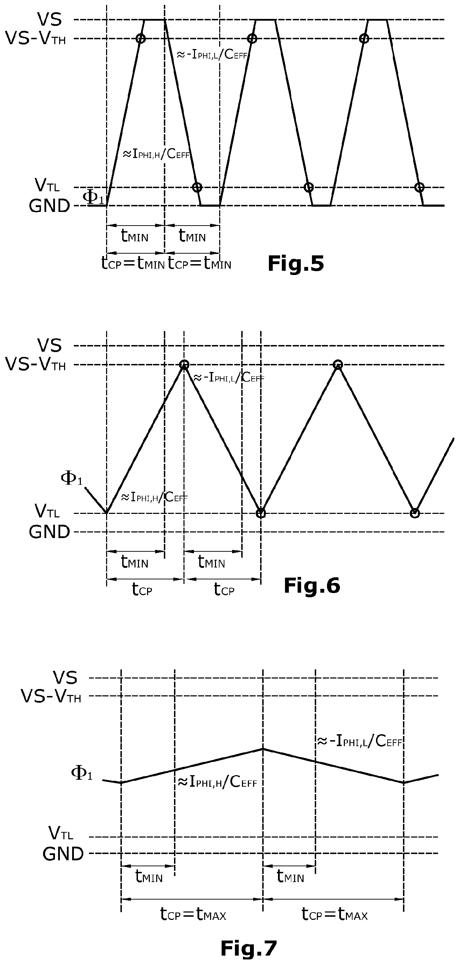

Abhängig vom Lastzustand der Ladungspumpe ergeben sich die folgenden möglichen Betriebsarten gemäß Fign. 5 bis 7.

Bezogen auf Fig. 5 gilt, dass die Dauer der Flanke bis zum Überschreiten der Schwellen kürzer als die Zeit $t_{MIN}$ ist. In diesem Fall wird der Kommutierungszeitpunkt nur durch die Zeitbedingung $t_{MIN}$ bestimmt. Die Ausgangsspannung hat einen trapezförmigen Verlauf mit "gedeckelter" maximaler Amplitude.

Eine weitere Steigerung des Wirkungsgrades wäre hier theoretisch durch eine höhere Arbeitsfrequenz möglich, sollte aber zugunsten begrenzter EMV-Abstrahlung durch $t_{MIN}$ limitiert sein.

Ein solcher Betriebszustand könnte sich z.B. im Hochlauf der Ladungspumpe bei maximalem $I_{PHI}$ ergeben, wenn die Zeitkonstante $(V_{SUP}\text{-}V_{TH}\text{-}V_{TL}) \cdot I_{PHI}/C_{EFF}$ kleiner als die vorgegebene Zeit $t_{MIN}$ ist.

Für Fig. 6 gilt, dass die Dauer der Flanke bis zum Überschreiten der Schwellen zwar länger als die Zeit $t_{MIN}$, aber immer noch kürzer als die Zeit $t_{MAX}$ ist. In diesem Fall wird der Kommutierungszeitpunkt ausschließlich durch das Erreichen der Schwellwerte $V_{SUP}\text{-}V_{TH}$ und $V_{TL}$, d.h. durch die "Schwellendurchgänge" der Phasenspannungen bestimmt. Die Ausgangsspannung hat einen dreieckförmigen Verlauf mit einer Amplitude, die sich aus den Schwellen ($V_{SUP}\text{-}V_{TH}$) und $V_{TL}$ ergibt. In dieser Betriebsart arbeitet die Ladungspumpe mit (sehr) hohem Wirkungsgrad.

Ein solcher Betriebszustand könnte sich z.B. im Hochlauf der Ladungspumpe bei maximalem $I_{PHI}$ ergeben, wenn die Zeitkonstante $(V_{SUP}\text{-}V_{TH}\text{-}V_{TL}) \cdot I_{PHI}/C_{EFF}$ größer als die vorgegebene Zeit $t_{MIN}$ ist.

Hinsichtlich Fig. 7 gilt, dass die Dauer der Flanke bis zum Überschreiten der Schwellen länger als die Zeit $t_{MAX}$ wäre. Dieser Fall tritt auf, wenn die Ausgangsspannung ihren Nennwert erreicht, so dass der Strom $I_{PHI,H}$ bzw. $I_{PHI,L}$ durch die äußere Regelschleife reduziert wird und damit auch die Flankensteilheit der Phasensignale abnimmt.

In diesem Fall wird der Kommutierungszeitpunkt nur durch die Zeitbedingung $t_{MAX}$ bestimmt, auch wenn die Phasenspannungen ihre jeweiligen Schwellen noch nicht überschritten haben. Die Ausgangsspannung hat ebenfalls einen dreieckförmigen Verlauf mit einer niedrigen Amplitude. In dieser Betriebsart arbeitet die Ladungspumpe bei ihrer minimalen Arbeitsfrequenz mit niedrigen Signalflanken, was sowohl ein regelmäßiges Nachladen der Pufferkapazität als auch einen unter EMV-Gesichtspunkten störungsarmen Betrieb erlaubt.

Ein solcher Betriebszustand könnte sich, wie oben beschrieben, im eingeschwungenen Betrieb der Ladungspumpe ergeben.

1.3 Variante 2: Kommutierung über Diodenspannungen

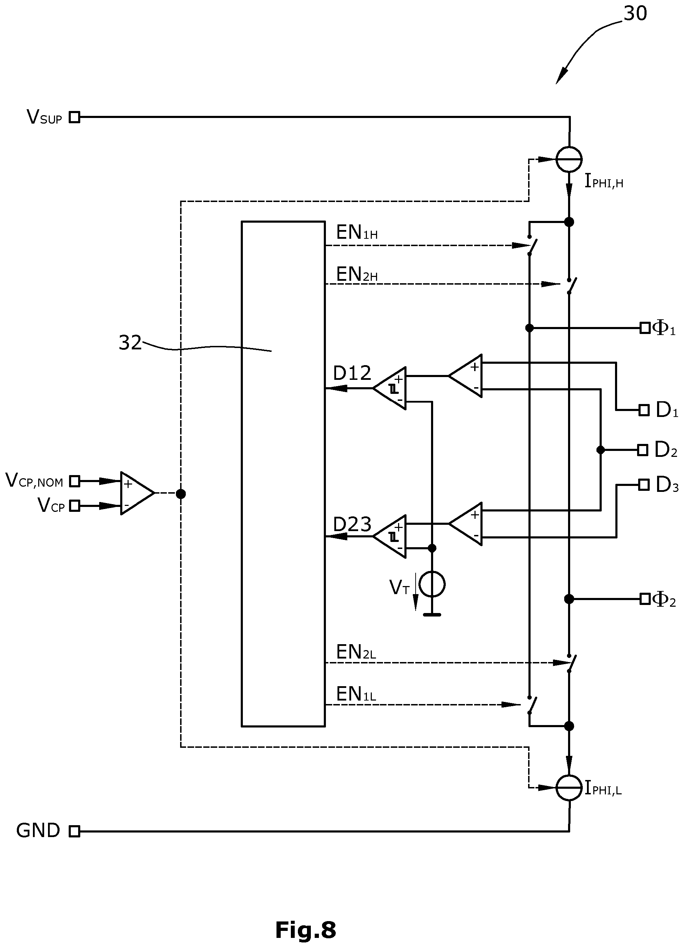

In der zweiten vorgestellten Variante werden statt der Phasensignale $\Phi_1$ und $\Phi_2$ die Flussspannungen über zwei Dioden (allg. Schalter) der Kaskadenstufe herangezogen, um das Ende des Ladungstransports des vorherigen Taktes zu detektieren. Zu diesem Zweck sind im Blockschaltbild der Fig. 8 die Diodenspannungen $D_1$, $D_2$ und $D_3$ bzw. deren Differenzen ausgewertet.

Während der Phase des Ladungstransports fließt in der jeweiligen Diode ein Strom in Flussrichtung, so dass sich über der Diode die von dem verwendeten Bauelement abhängige Flussspannung $U_T$ messen lässt. Nach dem Ende des Ladungstransports sinkt diese Spannung auf einen Wert von Null. Durch die im Blockschaltbild der Fig. 8 angedeutete Differenzbildung und den Vergleich mit einer geeigneten Schwelle $V_T$ kann das Ende der Flussphase durch ein Unterschreiten der Schwelle detektiert werden. Bei Beendigung des Ladungstransports ist die besagte Differenzspannung aber nicht notwendigerweise sogleich Null Volt. Sie verringert sich vielmehr auf einen Wert unterhalb der Diodenschwellspannung, womit durch die Diode kein Ladestrom mehr fließt.

Alle weiteren Randbedingungen, insbesondere die zusätzlichen Zeitbedingungen $t_{MIN}$ und $t_{MAX}$ bleiben auch in dieser Variante gültig.

Damit lassen sich für den Zustand $\Phi_1$=H und $\Phi_2$=L (EN$_{1H}$ und EN$_{2L}$ aktiv, EN$_{1L}$ und EN$_{2H}$ inaktiv) die Kommutierungsbedingungen wie folgt zusammenfassen:

$$[(t \geq t_{MIN}) \wedge ((V(D_1) - V(D_2)) < V_T)] \vee (t \geq t_{MAX}),$$

oder

$$[(t \geq t_{MIN}) \wedge (D12 = L)] \vee (t \geq t_{MAX})$$

Für den komplementären Zustand $\Phi_1$=L und $\Phi_2$=H (EN$_{1L}$ und EN$_{2H}$ aktiv, EN$_{1H}$ und EN$_{2L}$ inaktiv) gilt analog:

$$[(t \geq t_{MIN}) \wedge ((V(D_2) - V(D_3)) < V_T)] \vee (t \geq t_{MAX}),$$

oder

$$[(t \geq t_{MIN}) \wedge (D23 = L)] \vee (t \geq t_{MAX})$$

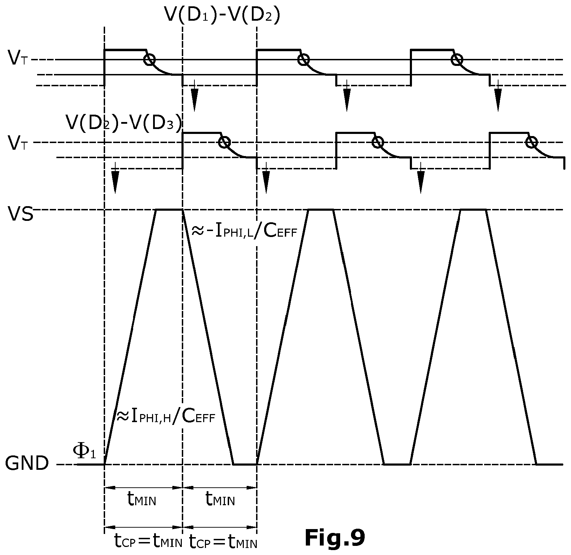

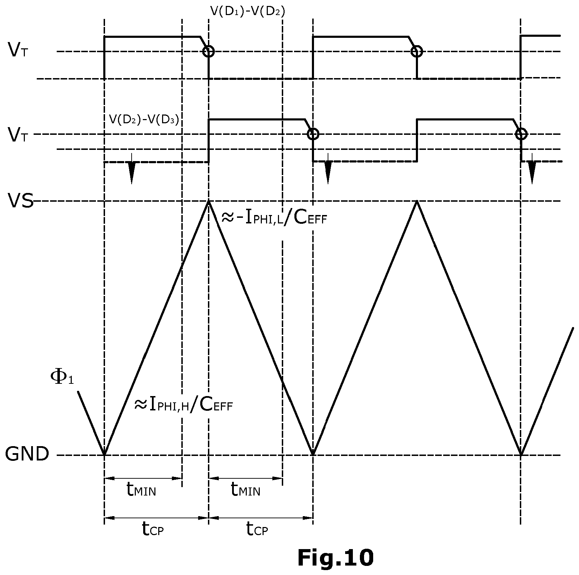

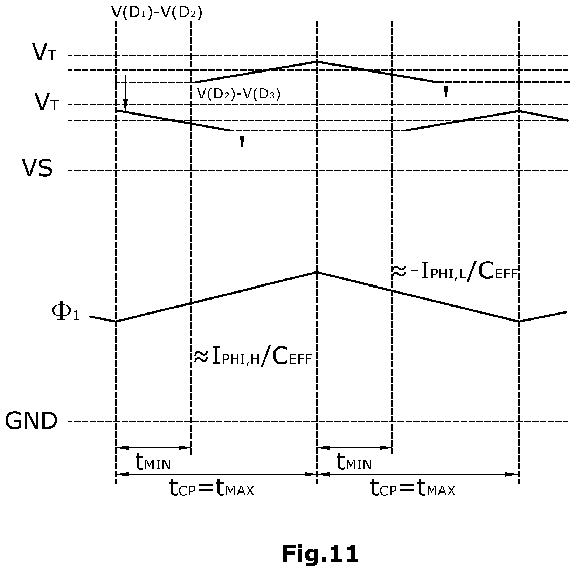

Ähnlich wie bei Variante 1 ergeben sich auch hier verschiedene lastabhängige Betriebszustände gemäß Fign. 9 bis 11.

BEZUGSZEICHENLISTE

| 10 | Ladungspumpe |
|---|---|
| 10' | Ladungspumpe |
| 10" | Ladungspumpe |
| 12 | Pumpstufe |
| 13 | Dioden-/Pumpkondensator-Verschaltung |
| 13' | Dioden-/Pumpkondensator-Verschaltung |
| 14 | Pumpstufe |
| 15 | Dioden-/Pumpkondensator-Verschaltung |
| 15' | Dioden-/Pumpkondensator-Verschaltung |
| 16 | Pumpstufe |
| 17 | Dioden-/Pumpkondensator-Verschaltung |
| 17' | Dioden-/Pumpkondensator-Verschaltung |
| 18 | Stufenschalter |
| 18' | Stufenschalter |
| 20 | Stufenschalter |
| 22 | Pumpkondensator |
| 22' | Pumpkondensator |
| 24 | Pumpkondensator |
| 24' | Pumpkondensator |
| 26 | Knotenpunkt |
| 26' | Knotenpunkt |
| 28 | Knotenpunkt |
| 28' | Knotenpunkt |
| 30 | Schaltelement |
| 32 | Pufferkondensator |
| 34 | Ansteuer- und Regeleinheit |
| D$_1$ | Diodenspannungen |
| D$_2$ | Diodenspannungen |
| D$_3$ | Diodenspannungen |

$\Phi_1$      Lade-(Phasen-)spannungen
$\Phi_2$      Lade-(Phasen-)spannungen
$V_{SUP}$   DC-Betriebsspannung
$t_{MAX}$   Maximalzeitspanne
$t_{MIN}$   Mindestzeitspanne


**Patentansprüche**

1.   Ladungspumpe zur Erzeugung einer Ausgangsspannung durch ganzzahlige oder gebrochenzahlige Vervielfachung einer DC-Betriebsspannung, mit

- mindestens einer Pumpstufe (12,14,16), die mindestens einen Pumpkondensator (22,24) und mindestens einen Stufenschalter (18,20) aufweist und zwischen der DC-Betriebsspannung ($V_{SUP}$) und einer Ladespannung geschaltet ist,
- wobei die Ladesspannung einen Zeitverlauf mit abwechselnd und jeweils zu Kommutierungszeitpunkten beginnenden, ansteigenden sowie abfallenden Zeitabschnitten aufweist,
- einem Pufferkondensator (32), der über einen weiteren Schalter (30) mit der mindestens einen Pumpstufe (12,14,16) verbunden ist und über dem die Ausgangsspannung anliegt, und
- einer Ansteuer- und Regeleinheit (34) zur Erzeugung mindestens einer Ladespannung und/oder zur Detektion eines Spannungsabfalls über dem mindestens einen Stufenschalter (18,20) oder über einem der Stufenschalter (18,20) bis unterhalb eines vorgebbaren Schwellwerts und zur Vorgabe der Kommutierungszeitpunkte zur Kommutierung der mindestens einen Ladespannung,
- **gekennzeichnet dadurch, dass** die Ansteuer- und Regeleinheit (34) dazu ausgebildet ist, den jeweils nächsten Kommutierungszeitpunkt gemäß mindestens einer der drei nachfolgend genannten Bedingungen einer jeweils entsprechenden, von einem Lastzustand der Ladungspumpe abhängigen Betriebsart vorzugeben:

- mit dem Ablauf einer vorgebbaren Mindestzeitspanne ($t_{MIN}$) ab dem letzten Kommutierungszeitpunkt,
- mit dem Ablauf einer vorgebbaren Maximalzeitspanne ($t_{MAX}$) ab dem letzten Kommutierungszeitpunkt oder
- mit Erreichen vorgebbarer Maximal- und Minimalschwellwerte der mindestens einen Ladespannung innerhalb von deren ansteigenden bzw. abfallenden Zeitabschnitten und/oder mit Erreichen eines Schwellwerts eines Spannungsabfalls über dem mindestens einen Stufenschalter (18,20) oder über mindestens einem der Stufenschalter (18,20), sofern der jeweilige Schwellwert innerhalb einer mit dem letzten Kommutierungszeitpunkt beginnenden Zeitspanne erreicht wird, die später als die Mindestzeitspanne ($t_{MIN}$) und früher als die Maximalzeitspanne ($t_{MAX}$) endet.

2.   Ladungspumpe nach Anspruch 1, **dadurch gekennzeichnet, dass** die Ansteuer- und Regeleinheit (34) das Erreichen des Maximalschwellwerts und des Minimalschwellwerts jeweils anhand der sich über dem mindestens einen Stufenschalter (18,20) einer Pumpstufe (12,14,16) ergebenden Spannung detektiert.

3.   Ladungspumpe nach Anspruch 1 oder 2, **dadurch gekennzeichnet, dass** die Größe des Pumpstroms zum Aufladen des mindestens einen Pumpkondensators (22,24) der mindestens einen Pumpstufe (12,14,16) in Abhängigkeit von der Größe der Abweichung der Ausgangsspannung von einer vorgebbaren Nennspannung veränderbar ist, indem der Ladestrom um so kleiner ist, je geringer die Abweichung der Ausgangsspannung von der Nennspannung ist.

4.   Ladungspumpe nach einem der Ansprüche 1 bis 3, **gekennzeichnet durch** mehrere als Kaskade aufeinanderfolgend gestaltete Pumpstufen (12,14,16), wobei der Pufferkondensator (32) über den weiteren Schalter (30) mit der letzten Pumpstufe (16) verbunden ist.

5.   Ladungspumpe nach Anspruch 4, **dadurch gekennzeichnet,**

- **dass** pro Pumpstufe (12,14,16) der mindestens eine Stufenschalter (18) mit dem mindestens einen Pumpkondensator (22) verbunden ist, wobei der mindestens eine Pumpkondensator (22) mit der Ladespannung verbunden ist,
- **dass**, bezogen auf die erste Pumpstufe (12), der Stufenschalter (18) mit der Betriebsspannung (22) verbunden ist und
- **dass**, bezogen auf jede weitere Pumpstufe (14,16), der Stufenschalter (18) mit dem Knotenpunkt der jeweils vorherigen Pumpstufe (12) verbunden ist.

6. Ladungspumpe nach Anspruch 4, **dadurch gekennzeichnet,**

   - **dass** pro Pumpstufe (12,14,16)

      - ein erster Stufenschalter (18) sowie ein erster Pumpkondensator (22) über einen ersten Knotenpunkt (26) miteinander verbunden sind, wobei der erste Pumpkondensator (22) mit einer ersten Ladespannung verbunden ist und
      - ein zweiter Stufenschalter (20) sowie ein zweiter Pumpkondensator (24) über einen zweiten Knotenpunkt (28) miteinander verbunden sind, wobei der zweite Stufenschalter (20) mit dem ersten Knotenpunkt (26) und der zweite Pumpkondensator (24) mit einer zweiten Ladespannung verbunden ist,

   - **dass**, bezogen auf die erste Pumpstufe (12), der erste Stufenschalter (18) mit der Betriebsspannung verbunden ist und
   - **dass**, bezogen auf jede weitere Pumpstufe (14,16), der erste Stufenschalter (18) mit dem zweiten Knotenpunkt (26) der jeweils vorherigen Pumpstufe (12,14,16) verbunden ist.

7. Ladungspumpe nach Anspruch 4, **dadurch gekennzeichnet,**

   - **dass** pro Pumpstufe

      - ein erster Stufenschalter (18) sowie ein erster Pumpkondensator (22) über einen ersten Knotenpunkt (26) miteinander verbunden sind, wobei der erste Pumpkondensator (22) mit der ersten Ladespannung verbunden ist,
      - ein zweiter Stufenschalter (20) sowie ein zweiter Pumpkondensator (24) über einen zweiten Knotenpunkt (28) miteinander verbunden sind, wobei der zweite Stufenschalter (20) mit dem ersten Knotenpunkt (26) und der zweite Pumpkondensator (24) mit einer zweiten Ladespannung verbunden ist,
      - ein dritter Stufenschalter (18') sowie ein dritter Pumpkondensator (22') über einen dritten Knotenpunkt (26') miteinander verbunden sind, wobei der dritte Pumpkondensator (22') mit der ersten Ladespannung verbunden ist, und
      - ein vierter Stufenschalter (20') sowie ein vierter Pumpkondensator (24') über einen vierten Knotenpunkt (28') miteinander verbunden sind, wobei der vierte Stufenschalter (20') mit dem dritten Knotenpunkt (28') vierte Pumpkondensator (24') mit der ersten Ladespannung verbunden ist,

   - **dass**, bezogen auf die erste Pumpstufe (12), der erste Stufenschalter (18) und der dritte Stufenschalter (18') mit der Betriebsspannung verbunden sind und
   - **dass**, bezogen auf jede weitere Pumpstufe (14,16), der erste Stufenschalter (18) mit dem zweiten Knotenpunkt (26) der jeweils vorherigen Pumpstufe (12,14,16) und der dritte Stufenschalter (18') mit dem vierten Knotenpunkt (28') der jeweils vorherigen Pumpstufe (12,14,16) verbunden ist.

8. Ladungspumpe nach einem der Ansprüche 1 bis 7, **dadurch gekennzeichnet, dass** die Stufenschalter (18,20) und/oder der weitere Schalter (30) als Dioden oder Transistoren ausgeführt sind.

**Claims**

1. A charge pump for generating an output voltage by whole-numbered or fraction-numbered multiplication of a DC operating voltage, said charge pump comprising

   - at least one pump stage (12,14,16) comprising at least one pump capacitor (22,24) and at least one stage switch (18,20) and connected between the DC operating voltage ($V_{SUP}$) and a charging voltage,
   - wherein the charging voltage has a temporal development with rising and falling time sections starting in an alternating manner and, in each case, at points of time of commutations,
   - a buffer capacitor (32) connected via a further switch (30) to the at least one pump stage (12,14,16) and having the output voltage applied to it, and
   - a controlling unit (34) for generating at least one charging voltage and/or for detection of a voltage drop across the at least one stage switch (18,20) or across one of the stage switches (18,20) until below a presettable threshold value and for presetting the points of time for commutation for commutating the at least one charging voltage,

**characterized in that** the controlling unit (34) is operative to set the respective next point of time for commutation in accordance with at least one of the three preconditions mentioned hereunder of a respective corresponding mode that depends on the load state of the charge pump:

- with expiration of a presettable minimum time period ($t_{MIN}$) from the last point of time of commutation,
- with expiration of a presettable maximum time period ($t_{MAX}$) from the last point of time of commutation, or
- upon reaching presettable maximum and minimum threshold values of the at least one charging voltage within its rising and respectively falling time sections and/or upon reaching a threshold value of a voltage drop across the at least one stage switch (18,20) or across at least one of the stage switches (18,20) if the respective threshold value is reached within a time period, beginning with the last point of time of commutation, which ends later than the minimum time period ($T_{MIN}$) and earlier than the maximum time period (tMAx).

2. The charge pump according to claim 1, wherein the controlling unit (34) is operative to detect the circumstance of reaching the maximum threshold value or the minimum threshold value respectively on the basis of the voltage occurring at the at least one stage switch (18,20) of a pump stage (12,14,16).

3. The charge pump according to claim 1 or 2, wherein the magnitude of the pump current for charging the at least one pump capacitor (22,24) of the at least one pump stage (12,14,16) is variable in dependence on the amount of the deviation of the output voltage from a presettable nominal voltage in that, the smaller the deviation of the output voltage from the nominal voltage is, the smaller the charge current is.

4. The charge pump according to any one of claims 1 to 3, wherein a plurality of pump stages (12,14,16), serially configured as a cascade, are provided, the buffer capacitor (32) being connected to the last buffer stage (16) via said further switch (30).

5. The charge pump according to claim 4, wherein

- for each pump stage (12,14,16), the at least one stage switch (18) is connected to the at least one pump capacitor (22), the at least one pump capacitor (22) being connected to the charging voltage,
- with respect to the first pump stage (12), the stage switch (18) is connected to the operating voltage (22), and
- with respect to each further pump stage (14,16), the stage switch (18) is connected to the node of the respective preceding pump stage (12).

6. The charge pump according to claim 4, wherein

- for each pump stage (12,14,16),

- a first stage switch (18) and a first pump capacitor (22) are connected to each other via a first node (26), the first pump capacitor (22) being connected to a first charging voltage, and
- a second stage switch (20) and a second pump capacitor (24) are connected to each other via a second node (28), the second pump capacitor (20) being connected to the first node (26), and the second pump capacitor (24) being connected to a second charging voltage,

- with respect to the first pump stage (12), the first stage switch (18) is connected to the operating voltage, and
- with respect to each further pump stage (14,16), the first stage switch (18) is connected to the second node (26) of the respective preceding pump stage (12,14,16).

7. The charge pump according to claim 4, wherein

- for each pump stage,

- a first stage switch (18) and a first pump capacitor (22) are connected to each other via a first node (26), the first pump capacitor (22) being connected to the first charging voltage,
- a second stage switch (20) and a second pump capacitor (24) are connected to each other via a second node (28), the second stage switch (20) being connected to the first node (26), and the second pump capacitor (24) being connected to a second charging voltage,
- a third stage switch (18') and a third pump capacitor (22') are connected to each other via a third node (26'), the third pump capacitor (22') being connected to the first charging voltage, and

- a fourth stage switch (20') and a fourth pump capacitor (24') are connected to each other via a fourth node (28'), the fourth stage switch being (20') being connected to the third node (28'), and the fourth pump capacitor (24') being connected to the first charging voltage,

- with respect to the first pump stage (12), the first stage switch (18) and the third stage switch (18') are connected to the operating voltage, and
- with respect to each further pump stage (14,16), the first stage switch (18) is connected to the second node (26) of the respective preceding pump stage (12,14,16), and the third stage switch (18') is connected to the fourth node (28') of the respective preceding pump stage (12,14,16).

8. The charge pump according to any one of claims 1 to 7, wherein the stage switches (18,20) and/or the further switch (30) are designed as diodes or transistors.

**Revendications**

1. Pompe de chargement destinée à produire une tension de sortie par multiplication entière ou fractionnaire d'une tension d'alimentation en courant continu, dotée

- d'au moins un étage de pompage (12, 14, 16), lequel comporte au moins un condensateur de pompage (22, 24) et au moins un commutateur d'étage (18, 20) et est commuté entre la tension d'alimentation en courant continu ($V_{SUP}$) et une tension de charge,
- dans laquelle la tension de charge comporte un déroulement chronologique avec des périodes croissantes et décroissantes en alternance et commençant à des instants de commutation respectifs,
- d'un condensateur tampon (32), lequel est relié à l'au moins un étage de pompage (12, 14, 16) par le biais d'au moins un commutateur supplémentaire (30) et aux bornes duquel la tension de sortie apparaît, et
- d'une unité de commande et de régulation (34) destinée à produire au moins une tension de charge et/ou à détecter une chute de tension aux bornes de l'au moins un commutateur d'étage (18, 20) ou aux bornes d'un des commutateurs d'étage (18, 20) jusqu'en-dessous d'une valeur seuil prédéfinissable et à prédéfinir les instants de commutation pour commuter l'au moins une tension de charge,
- **caractérisée en ce que** l'unité de commande et de régulation (34) est réalisée de façon à prédéfinir l'instant de commutation suivant respectif conformément à au moins une des trois conditions nommées ci-après d'un mode de fonctionnement correspondant et dépendant d'un état de sollicitation de la pompe de chargement :

- avec l'écoulement d'une durée minimale prédéfinissable ($t_{MIN}$) à partir du dernier instant de commutation,
- avec l'écoulement d'une durée maximale prédéfinissable ($t_{MAX}$) à partir du dernier instant de commutation ou
- lorsque sont atteintes des valeurs seuils maximale et minimale de l'au moins une tension de charge à l'intérieur de périodes croissantes et décroissantes de celui-ci et/ou lorsqu'est atteinte une valeur seuil d'une chute de tension aux bornes de l'au moins un commutateur d'étage (18, 20) ou aux bornes d'au moins un des commutateurs d'étage (18, 20), pour autant que soit atteinte la valeur seuil respective à l'intérieur d'une durée commençant avec le dernier instant de commutation, laquelle se termine plus tard que la durée minimale ($t_{MIN}$) et plus tôt que la durée maximale ($t_{MAX}$).

2. Pompe de chargement selon la revendication 1, **caractérisée en ce que** l'unité de commande et de régulation (34) détecte que la valeur seuil maximale et la valeur seuil minimale sont respectivement atteintes à l'aide de la tension obtenue aux bornes de l'au moins un commutateur d'étage (18, 20) d'un étage de pompage (12, 14, 16).

3. Pompe de chargement selon la revendication 1 ou 2, **caractérisée en ce que** la grandeur du courant de pompage destiné à charger l'au moins un condensateur de pompage (22, 24) de l'au moins un étage de pompage (12, 14, 16) est modifiable en fonction de la grandeur de la déviation de la tension de sortie par rapport à une tension nominale prédéfinissable, le courant de charge étant d'autant plus petit que la déviation de la tension de sortie par rapport à la tension nominale est réduite.

4. Pompe de chargement selon l'une des revendications 1 à 3, **caractérisée par** plusieurs étages de pompage (12, 14, 16) conçus en cascade l'un à la suite de l'autre, dans laquelle le condensateur tampon (32) est relié au dernier étage de pompage (16) par le biais du commutateur supplémentaire (30).

**5.** Pompe de chargement selon la revendication 4, **caractérisée en ce que**

- l'au moins un commutateur d'étage (18) est relié à l'au moins un condensateur de pompage (22) par étage de pompage (12, 14, 16), dans laquelle l'au moins un condensateur de pompage (22) est relié à la tension de charge, **en ce que**
- par rapport au premier étage de pompage (12), le commutateur d'étage (18) est relié à la tension d'alimentation (22) et **en ce que**
- par rapport à chaque étage de pompage supplémentaire (14, 16), le commutateur d'étage (18) est relié au point nodal de l'étage de pompage (12) respectivement précédent.

**6.** Pompe de chargement selon la revendication 4, **caractérisée en ce que**

- par étage de pompage (12, 14, 16)
- un premier commutateur d'étage (18) ainsi qu'un premier condensateur de pompage (22) sont reliés l'un à l'autre par le biais d'un premier point nodal (26), dans laquelle le premier condensateur de pompage (22) est relié à une première tension de charge et
- un deuxième commutateur d'étage (20) ainsi qu'un deuxième condensateur de pompage (24) sont reliés l'un à l'autre par le biais d'un deuxième point nodal (28), dans laquelle le deuxième commutateur d'étage (20) est relié au deuxième point nodal (26) et le deuxième condensateur de pompage (24) est relié à une deuxième tension de charge, **en ce que**
- par rapport au premier étage de pompage (12), le premier commutateur d'étage (18) est relié à la tension d'alimentation et **en ce que**
- par rapport à chaque étage de pompage supplémentaire (14, 16), le premier commutateur d'étage (18) est relié au deuxième point nodal (26) de l'étage de pompage (12, 14, 12) respectivement précédent.

**7.** Pompe de chargement selon la revendication 4, **caractérisée en ce que**

- par étage de pompage

  - un premier commutateur d'étage (18) ainsi qu'un premier condensateur de pompage (22) sont reliés l'un à l'autre par le biais d'un premier point nodal (26), dans laquelle le premier condensateur de pompage (22) est relié à la première tension de charge,
  - un deuxième commutateur d'étage (20) ainsi qu'un deuxième condensateur de pompage (24) sont reliés l'un à l'autre par le biais d'un deuxième point nodal (28), dans laquelle le deuxième commutateur d'étage (20) est relié au deuxième point nodal (26) et le deuxième condensateur de pompage (24) est relié à une deuxième tension de charge, **en ce que**
  - un troisième commutateur d'étage (18') ainsi qu'un troisième condensateur de pompage (22') sont reliés l'un à l'autre par le biais d'un troisième point nodal (26'), dans laquelle le troisième condensateur de pompage (22') est relié à la première tension de charge et
  - un quatrième commutateur d'étage (20') ainsi qu'un quatrième condensateur de pompage (24') sont reliés l'un à l'autre par le biais d'un quatrième point nodal (28'), dans laquelle le quatrième commutateur d'étage (20') est relié au troisième point nodal (28') et le quatrième condensateur de pompage (24') est relié à la première tension de charge, **en ce que**

- par rapport au premier étage de pompage (12), le premier commutateur d'étage (18) et le troisième commutateur d'étage (18') sont reliés à la tension d'alimentation et **en ce que**
- par rapport à chaque étage de pompage supplémentaire (14, 16), le premier commutateur d'étage (18) est relié au deuxième point nodal (26) de l'étage de pompage (12, 14, 12) respectivement précédent et le troisième commutateur d'étage (18') est relié au quatrième point nodal (28') de l'étage de pompage (12, 14, 12) respectivement précédent.

**8.** Pompe de chargement selon l'une des revendications 1 à 7, **caractérisée en ce que** les commutateurs d'étage (18, 20) et/ou le commutateur supplémentaire (30) sont réalisés comme diodes ou comme transistors.

EP 3 291 430 B1

**Fig.1**

**Fig.2**

EP 3 291 430 B1

**Fig.3**

**Fig.4**

**Fig.5**

**Fig.6**

**Fig.7**

**Fig.8**

Fig.9

Fig.10

**Fig.11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2013021845 A
- CN 204886694 U